Europäisches Patentamt

(19) **European Patent Office**

**Office européen des brevets**

(11) Numéro de publication: **0 128 835**
**B1**

(12) **FASCICULE DE BREVET EUROPEEN**

(45) Date de publication du fascicule du brevet:
**05.08.87**

(21) Numéro de dépôt: **84401184.1**

(22) Date de dépôt: **07.06.84**

(51) Int. Cl.⁴: **B 01 D 1/22,** B 01 D 9/00

(54) Dispositif de séparation du solvant d'une solution par mise en couche mince de ladite solution.

(30) Priorité: **10.06.83 FR 8309662**

(43) Date de publication de la demande:
**19.12.84 Bulletin 84/51**

(45) Mention de la délivrance du brevet:
**05.08.87 Bulletin 87/32**

(84) Etats contractants désignés:
**AT BE CH DE FR GB IT LI LU NL SE**

(56) Documents cités:
**DE - C - 570 058**
**FR - A - 2 394 042**
**GB - A - 419 566**
**GB - A - 422 941**
**US - A - 3 275 529**
**US - A - 3 400 548**

(73) Titulaire: **ELECTRICITE DE FRANCE Service National, 2, rue Louis Murat, F-75008 Paris (FR)**

(72) Inventeur: **Missirian, Christian, Appt. A. 2234, Rés.Valvert Rue Jacques Durand, F-77210 Avon (FR)**

(74) Mandataire: **Schrimpf, Robert et al, Cabinet Regimbeau 26, Avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de séparation du solvant d'une solution par mise en couche mince de cette solution.

On connaît déjà dans la technique antérieure des dispositifs pour réaliser la concentration, la surconcentration ou le séchage d'une solution liquide ou pâteuse par mise en couche mince de cette solution sur une surface d'échange thermique afin d'évaporer ou de sécher le solvant de la solution.

Un premier dispositif connu est un évaporateur en couche mince, muni d'un rotor, destiné essentiellement à traiter des solutions d'une viscosité supérieure à 1,5 Pa.s. Un tel évaporateur comprend une paroi cylindrique chauffée extérieurement, disposée verticalement ou horizontalement, à l'intérieur de laquelle tourne un rotor à pales fixes ou mobiles destinées à étaler la solution en couche mince sur cette paroi chauffée. La solution à traiter est introduite par le haut de la paroi cylindrique et est reprise par les pales du rotor en suivant un trajet sensiblement hélicoïdal, le produit concentré étant récupéré à la base de la paroi cylindrique. Un tel dispositif connu présente un certain nombre d'inconvénients:

le dispositif doit être massif et surdimensionné pour répondre à la législation des appareils à pression (dans le cas d'un fonctionnement à la vapeur) et assurer une bonne tenue mécanique;

le dispositif n'utilise qu'une partie de la surface d'échange;

l'évaporateur exige un usinage particulier du stator (paroi cylindrique) et rotor ce qui entraîne un coût de fabrication élevé;

le jeu entre le stator et le rotor, qui défint théoriquement l'épaisseur du film, est fonction de la taille de l'évaporateur, le film étant d'autant plus épais que l'évaporateur est plus important;

compte tenu du coût élevé d'un tel dispositif, seuls les évaporateurs de petite surface sont utilisés; les débits évaporatoires sont donc faibles et la chaleur latente des buées difficilement récupérable.

le fonctionnement de l'évaporateur nécessite un grand écart de température entre le fluide chauffant utilisé pour chauffer la paroi cylindrique et le liquide à évaporer;

étant donné que la pièce principale de l'évaporateur, à savoir le rotor, est en rotation, une lubrification est recommandable;

le dispositif présente des risques de blocage du rotor lors de l'apparition importante de parties sèches sur la paroi cylindrique; et

le dispositif nécessite des précautions à prendre au niveau des paliers pour réaliser une étanchéité parfaite lors d'un fonctionnement sous vide.

Un deuxième type de dispositif connu est un sécheur à film mince, muni d'un rotor à pales pendulaires, qui permet de réunir surconcentration et séchage. Un tel dispositif s'apparente à l'évaporateur décrit précédemment, la différence essentielle étant que le rotor est muni de pales oscillantes, montées sur charnière, au lieu de pales fixes ou simplement articulées.

Un tel sécheur présente les inconvénients cités précédemment pour les évaporateurs en couche mince.

Il faut en outre signaler que le coût de fabrication d'un tel sécheur est plus élevé que celui d'un évaporateur en couche mince. Par ailleurs, le sécheur ne peut être utilisé que pour certains types de solutions dont le séchage ne passe pas par une forme pâteuse. Finalement, il présente des risques d'obturation de l'orifice de sortie.

Le document US-A-3 275 529 décrit également un dispositif de séparation du solvant d'une solution par mise en couche mince de cette solution, en particulier pour la récupération d'eau potable à partir d'eau salée, comportant au moins une surface d'échange thermique plane et verticale, des moyens d'alimentation pour amener la solution à la partie supérieure de la surface d'échange et des moyens de récupération de produit en partie inférieure de la surface d'échange.

On a décrit dans le document GB-A-419 566 un autre dispositif pour l'évaporation de liquides par mise en couche mince de ceux-ci. Ce dispositif comprend une surface d'échange cylindrique verticale, des moyens d'alimentation pour amener les liquides à évaporer à la partie supérieure de la surface d'échange et des moyens de récupération de produit en partie inférieure de la surface d'échange ainsi que des moyens de récupération de vapeur au voisinage de la partie supérieure de la surface d'échange.

La présente invention propose un dispositif de séparation qui permet d'éviter les inconvénients des dispositifs connus décrits précédemment.

Parmi les principaux avantages du dispositif de l'invention, on peut signaler tout d'abord que celui-ci permet de réaliser la concentration, la surconcentration ou le séchage de solutions liquides ou pâteuses.

En outre, le dispositif de l'invention est particulièrement économique, il permet de surcroît de conserver la qualité du produit, ce qui est particulièrement important dans le cas de produits thermosensibles. Finalement, le dispositif de l'invention est d'un coût de fabrication réduit.

Le dispositif de séparation conforme à la présente invention, du type précité comportant au moins une surface d'échange thermique, plane et verticale, des moyens d'alimentation pour amener la solution à la partie supérieure de la surface d'échange et des moyens de récupération de produit en partie inférieure de la surface d'échange, est caractérisé par le fait qu'il comprend en outre des moyens d'action thermique pour amener la surface d'échange à une température comprise entre 0° et 200°C; au moins un dispositif applicateur horizontal déplaçable verticalement le long de la surface d'échange pour y étaler la solution en couche mince; des moyens d'entraînement pour déplacer le dispositif applicateur en translation verticale alternée de haut en bas et de bas en haut; des moyens de serrage pour régler l'écartement entre le dispositif applicateur et la surface d'échange.

Le dispositif applicateur peut être formé d'un racleur ou d'un rouleau.

Selon un mode de réalisation avantageux, le dispositif applicateur est un rouleau d'axe horizontal.

Dans un mode de réalisation préféré de l'invention, le dispositif comporte deux surfaces d'échange parallèles et espacées qui définissent entre elles une enceinte pour les moyens d'action thermique. Un tel mode de réalisation permet de doubler la surface thermique tout en améliorant l'échange thermique entre les moyens d'action thermique situés à l'intérieur de l'inceinte et les deux surfaces d'échange.

Les moyens d'action thermique peuvent être des moyens de chauffage pour provoquer la séparation du solvant par évaporation. Ces moyens de chauffage peuvent être constitués de moyens en soi connus, tels qu'un fluide chauffant, des résistances électriques, etc.

En variante, ces moyens d'action thermique sont des moyens de réfrigération permettant de provoquer la séparation du solvant par cristallisation. Ces moyens de réfrigération, qui peuvent être réalisés de toute manière connue, comportent avantageusement la circulation d'un fluide frigorigène.

Les moyens d'action thermique précités permettant d'amener la surface d'échange à une température comprise entre 0° et 200°C, dans le cas d'une évaporation, et la solution à traiter à une température comprise entre 0° et 120°C, l'écart de température entre les moyens d'action thermique et la solution à traiter pouvant varier de 5° à 100°C.

Selon une autre caractéristique de l'invention, les moyens de serrage sont asservis aux moyens d'entraînement en sorte que l'écartement entre le dispositif applicateur et la surface d'échange décroisse progressivement lors du déplacement du dispositif applicateur de haut en bas puis augmente à nouveau et reste constant lors du déplacement du dispositif applicateur de bas en haut. Un tel agencement permet de diminuer progressivement l'épaisseur de la couche mince au fur et à mesure que cette couche est étalée par le dispositif applicateur. Il permet également d'assurer la remontée du dispositif applicateur sans contact avec la couche mince sur la surface d'échange.

Selon une autre caractéristique de l'invention, le rouleau formant dispositif applicateur est monté à rotation libre sur deux supports d'extrémité déplaçables en synchronisme sous l'action des moyens d'entraînement, les moyens de serrage étant portés par lesdits supports.

Selon encore une autre caractéristique de l'invention, les supports précités comportent une fente oblongue horizontale pour recevoir une extrémité du rouleau et les moyens de serrage comportent une liaison reliée à une bague montée sur l'axe du rouleau et à la tige d'un vérin monté veticalement sur le support.

Dans une variante de réalisation de l'invention, le dispositif comporte un rouleau supérieur déplaçable sur sensiblement la demi partie supérieure de la surface d'échange et un rouleau inférieur déplaçable sur sensiblement la demi partie inférieure de la surface d'échange. Un tel dispositif présente notamment comme avantage de pouvoir utiliser un vérin ayant sensiblement une course moitié de celle du vérin utilisé pour l'entraînement d'un seul rouleau.

D'autres caractéristiques et avantages de l'invention seront mieux compris à la lecture de la description détaillée qui va suivre et qui se réfère aux dessins annexés sur lesquels:

La fig. 1 est une vue en perspective d'un dispositif de séparaction selon l'invention comportant deux surfaces d'échange;

la fig. 2 est une vue en élévation montrant la structure d'un des supports et des moyens de serrage du dispositif de la fig. 1;

la fig. 3 est une vue de côté d'un dispositif selon l'invention comportant deux rouleaux sur chacune des surfaces d'échange.

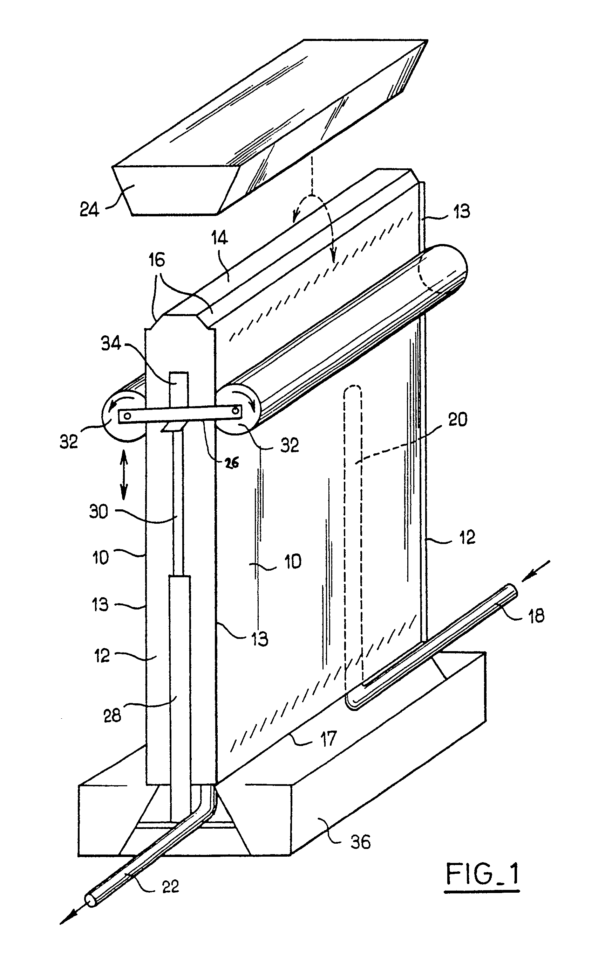

Le dispositif de séparation représenté sur la fig. 1 comporte deux surfaces d'échange planes et verticales 10 constituées de deux plaques, par exemple en acier inoxydable, parallèles et espacées l'une de l'autre. Les deux plaques formant les surfaces d'échange 10 sont reliées par deux faces latérales verticales 12 formant des rebords verticaux 13 sur chacune desdites plaques, par une face supérieure horizontale 14 présentant deux chanfreins 16 et par une face inférieure horizontale 17. Les deux surfaces d'échange 10 définissent ainsi entre elles une enceinte destinée à recevoir des moyens d'action thermique. Dans l'exemple particulier représenté sur la fig. 1, ces moyens d'action thermique comportent une canalisation d'entrée 18 reliée à un distributeur 20 disposé à l'intérieur de l'enceinte, cette dernière étant reliée à une canalisation de sortie 22 pour permettre la circulation d'un fluide chauffant ou réfrigérant.

Le dispositif comporte par ailleurs, au-dessus de la face supérieure 14, un bac d'alimentation 24 destiné à contenir la solution à traiter. Ce bac d'alimentation est muni de moyens appropriés, par exemple de buses, pour permettre la distribution progressive de la solution en partie supérieure des deux surfaces d'échange 10. La répartition de la solution à traiter s'effectue ainsi sur les deux surfaces d'échange 10 par gravité. Toutefois, il est possible, dans le cadre de l'invention, de prévoir un applicateur tel qu'une raclette pour permettre la distribution de la solution à traiter.

Le dispositif comporte en outre deux supports horizontaux 26 déplaçables en synchronisme sous l'action chacun d'un vérin pneumatique 28, disposé verticalement, dont la tige 30 est reliée au support 26. Les deux supports 26 sont déplaçables le long des faces verticales 12 précitées et supportent chacun deux rouleaux 32 d'axe horizontal, montés à rotation libre. Ces deux rouleaux, réalisés par exemple en polytétrafluoroéthylène, sont destinés à étaler la solution à traiter en couche mince sur les deux surfaces d'échange 10. A cet effet, les deux vérins 28 sont commandés de manière à déplacer les supports 26 et par conséquent les rouleaux 32 en translation verticale alternée de haut en bas et de bas en haut.

Le dispositif représenté sur la fig. 1 comporte en outre des moyens de serrage 34, portés par les supports 26, et destinés à régler l'écartement entre chacun des rouleaux 32 et la surface d'échange 10 correspondante. Ces moyens de serrage sont asservis aux moyens d'entraînement des rouleaux en sorte que l'écartement entre chaque rouleau 32 et la surface d'échange 10 correspondante décroisse progressivement lors du déplacement du rouleau de haut en bas et augmente à nouveau et reste constant lors du déplacement du rouleau de bas en haut.

Cet agencement permet de diminuer progressivement l'épaisseur de la couche de solution à sécher ou à concentrer et de favoriser d'une part la séparation du solvant et d'autre part l'évacuation de la solution concentrée, le mouvement ascendant des rouleaux 32 s'effectuant sans contact avec la couche de solution à traiter.

Ceci permet de récupérer, en partie inférieure des surfaces d'échange 10, un produit séché ou concentré. Ce produit est récupéré dans un bac approprié 36.

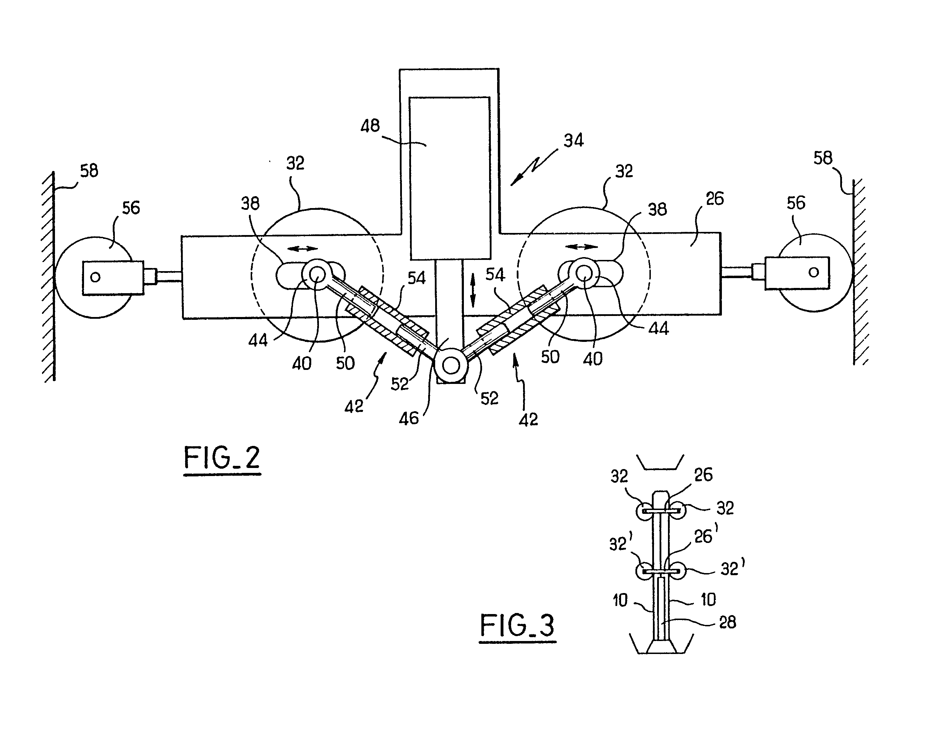

On se référera maintenant plus particulièrement à la fig. 2 pour décrire les moyens de serrage de l'invention.

Chacun des supports 26 comporte deux fentes oblongues horizontales 38 pour recevoir chacune une des extrémités de l'axe 40 d'un rouleau 32. Les moyens de serrage 34 comportent une liaison 42 reliée à une bague 44 montée sur l'axe du rouleau et à la tige 46 d'un vérin 48 monté verticalement sur le support. Les deux vérins 48 portés par les supports 26 sont commandés en synchronisme et asservis au mouvement des vérins 28 pour permettre de régler l'écartement comme indiqué précédemment. Comme on peut le voir sur le dessin, le déploiement de la tige 46 des vérins 48 permet de diminuer l'écartement entre le rouleau de la surface d'échange correspondante, tandis que le retrait de la tige du vérin permet au contraire d'augmenter cet écartement. Pour permettre un réglage précis des liaisons 42, chacune d'elle comprend une tige 50 reliée à la bague 44 et une tige 52 reliée à la tige 46 du vérin. Les extrémités des deux tiges 50 et 52 en vis à vis sont filetées et reliées par un manchon 54 fileté intérieurement. Les parties filetées des tiges 50 et 52 sont à pas contraire, en sorte que en tournant le manchon 54 dans un sens on diminue la longueur de la liaison et que, en le tournant dans l'autre sens, on augmente au contraire la longueur de la liaison.

Le support 26 est par ailleurs muni de deux roulettes de guidage 56 coopérant avec des guides verticaux 58 de manière à assurer un déplacement parfaitement vertical des deux supports 26 et par conséquent des rouleaux.

Dans la variante de réalisation représentée sur la fig. 3, le dispositif comporte deux rouleaux supérieurs 32 supportés par un support 26 et deux rouleaux inférieurs 32' supportés par un support 26'. Les deux supports 26 et 26' sont entraînés en synchronisme par un vérin 28 de telle sorte que les rouleaux supérieurs se déplacent sur sensiblement la demi partie supérieure de surface d'échange 10 et que les rouleaux inférieurs se déplacent sur sensiblement la demi partie inférieure des surfaces d'échange. Cette disposition a pour avantage de permettre l'utilisation de vérins 28 ayant une course sensiblement de moitié par rapport à celle des vérins du dispositif de la fig. 1.

Dans une autre variante de réalisation, les moyens de serrage ne sont pas asservis aux moyens d'entraînement, mais constitués par une faible inclinaison relative entre la surface d'échange (10) et le plan dans lequel se déplace l'axe du rouleau (32) de sorte que l'écartement entre le rouleau et la surface d'échange décroisse progressivement lors du déplacement du rouleau de haut en bas. Ainsi dans les cas où l'on utilise deux surfaces d'échange, celles-ci ne seront pas exactement parallèles de sorte que la distance qui les sépare soit sensiblement plus grande à leur partie inférieure qu'à leur partie supérieure.

Le dispositif de l'invention peut être placé à l'intérieur d'une enceinte hermétique munie de moyens pour y faire le vide permettant ainsi de récupérer les buées et les comprimer pour les envoyer comme fluide chauffant.

On remarquera que le dispositif de l'invention est un dispositif modulaire et qu'on peut utiliser en parallèle une succession de tels dispositifs.

Le dispositif de l'invention peut être utilisé en particulier pour l'évaporation d'un solvant d'une solution dans le but de concentrer des produits organiques. Ces produits organiques peuvent être des produits du domaine agroalimentaire, par exemple des jus de fruit, des concentrés de tomate, etc.; ou encore des produits du domaine chimique, comme des latex, de l'acide sulfurique etc.

Le dispositif peut être également appliqué au séchage de solutions pour l'obtention d'un produit sec à partir d'un produit concentré, par exemple pour les pigments pour peinture.

Enfin, lorque le fluide chauffant est un fluide frigorigène, le dispositif permet la cristallisation du solvant de la solution. C'est ainsi que le dispositif peut être utilisé pour l'obtention de produits concentrés, tels que des jus de fruit, des extraits de café, etc.

**Revendications**

1. Dispositif de séparation du solvant d'une solution par mise en couche mince de cette solution, du type comportant au moins une surface d'échange thermique, plane et verticale (10), des moyens d'alimentation (24) pour amener la solution à la partie supérieure de la surface d'échange et des moyens de récupération de produit (36) en partie inférieure de la surface d'échange, caractérisé par le fait qu'il comprend en outre: des moyens d'action thermique (20) pour amener la surface d'échange à une température comprise entre 0° et 200°C; au moins un dispositif applicateur (32) horizontal déplaçable verticalement le long de la surface d'échange pour y étaler la solution en couche mince; des moyens d'entraînement (28) pour déplacer le dispositif applicateur en translation verticale alternée de haut en bas et de bas en haut; des moyens de serrage (34) pour régler l'écartement entre le dispositif applicateur et la surface d'échange.

2. Dispositif selon la revendication 1, caractérisé par le fait que le dispositif applicateur est un rouleau (32) d'axe horizontal.

3. Dispositif selon l'une des revendications 1 et 2, caractérisé par le fait qu'il comporte deux surfaces d'échange parallèles et espacées (10) qui définissent entre elles une enceinte pour les moyens d'action thermique (20).

4. Dispositif selon l'une des revendications 1 à 3, caractérisé par le fait que les moyens d'action thermique (20) sont des moyens de chauffage pour provoquer la séparation du solvant par évaporation.

5. Dispositif selon l'une des revendications 1 à 3, caractérisé par le fait que les moyens d'action thermique (20) sont des moyens de réfrigération pour provoquer la séparation du solvant par cristallisation.

6. Dispositif selon l'une des revendications 1 à 5, caractérisé par le fait que les moyens de serrage (34) sont asservis aux moyens d'entraînement (28) en sorte que l'écartement entre le dispositif applicateur (32) et la surface d'échange (10) décroisse progressivement lors du déplacement du dispositif applicateur de haut en bas, puis augemente à nouveau et reste constant lors du déplacement du dispositif applicateur de bas en haut.

7. Dispositif selon l'une des revendications 1 à 6, prise en combinaison avec la revendication 2, caractérisé par le fait que le rouleau (32) est monté à rotation sur deux supports d'extrémité (26) déplaçables en synchronisme sous l'action des moyens d'entraînement (28) et par le fait que les moyens de serrage (34) sont portés par lesdits supports.

8. Dispositif selon la revendication 7, caractérisé par le fait que les supports (26) comportent une fente oblongue horizontale (38) pour recevoir une extrémité d'axe du rouleau et que les moyens de serrage (34) comportent une liaison (42) reliée à une bague (44) montée sur l'axe du rouleau et à la tige (46) d'un vérin (48) monté verticalement sur le support.

9. Dispositif selon l'une des revendications 7 et 8, caractérisé par le fait que les supports (26) sont munis de roulettes de guidage (56) coopérant avec des guides verticaux (58).

10. Dispositif selon la revendication 1, caractérisé par le fait que les moyens de serrage (34) sont constitués par une faible inclinaison relative entre la surface d'échange (10) et le plan dans lequel se déplace la génératrice du dispositif applicateur (32) adjacent à cette surface d'échange de sorte que l'écartement entre le dispositif applicateur (32) et la surface d'échange décroisse progressivement lors du déplacement du dispositif applicateur de haut en bas.

11. Dispositif selon l'une des revendications 1 à 10, caractérisé par le fait que le dispositif applicateur comporte un rouleau supérieur (32) déplaçable sur sensiblement la demi-partie supérieure de la surface d'échange (10) et un rouleau inférieur (32') déplaçable sur sensiblement la demi-partie inférieure de la surface d'échange.

12. Dispositif selon l'une des revendications 1 à 11, caractérisé par le fait que la surface d'échange (10) est une plaque d'acier inoxydable et le dispositif applicateur est en polytétrafluoroéthylène.

**Patentansprüche**

Vorrichtung zur Abtrennung eines Lösungsmittels aus einer Lösung durch Überführung der Lösung in eine Dünnschicht derjenigen Art, die wenigstens eine ebene und vertikale Wärmeaustauschfläche (10), eine Zufuhreinrichtung (24), um die Lösung dem oberen Teil der Austauschfläche zuzuführen, und eine Einrichtung (36) zum Wiedergewinnen des Produktes am unteren Teil der Austauschfläche aufweist, dadurch gekennzeichnet, dass sie weiterhin umfasst: Wärmewirkungsmittel (20), um die Austauschfläche auf eine Temperatur zwischen 0°C und 200°C zu bringen; wenigstens eine horizontale Aufbringeinrichtung (32), die vertikal entlang der Austauschfläche verschiebbar ist, um dort die Lösung in eine Dünnschicht auszubreiten; Antriebsmittel (28) zum vertikalen Verschieben der Aufbringeinrichtung abwechselnd von oben nach unten und von unten nach oben; Haltemittel (34), um den Abstand zwischen der Aufbringeinrichtung und der Austauschfläche zu regeln.

2. Vorrichtung nach Anspruch 1, dadurch gekennzeichnet, dass die Aufbringeinrichtung eine Rolle (32) mit waagerechter Achse ist.

3. Vorrichtung nach einem der Ansprüche 1 und 2, dadurch gekennzeichnet, dass sie zwei Austauschflächen (10) aufweist, die zueinander parallel und in einem Abstand voneinander angeordnet sind und die zwischen sich einen Raum für die Wärmewirkungsmittel (20) bilden.

4. Vorrichtung nach einem der Ansprüche 1 bis 3, dadurch gekennzeichnet, dass die Wärmewirkungsmittel (20) Heizmittel sind, um die Abtrennung des Lösungsmittels durch Verdampfung hervorzurufen.

5. Vorrichtung nach einem der Ansprüche 1 bis 3, dadurch gekennzeichnet, dass die Wärmewirkungsmittel (20) Kühlmittel sind, um die Abtrennung des Lösungsmittels durch Kristallisation hervorzurufen.

6. Vorrichtung nach einem der Ansprüche 1 bis 5, dadurch gekennzeichnet, dass die Haltemittel (34) durch die Antriebsmittel (28) derart gesteuert sind, dass der Abstand zwischen der Aufbringeinrichtung (32) und der Austauschfläche (10) bei Verschiebung der Aufbringeinrichtung von oben nach unten progressiv abnimmt, dann aufs neue zunimmt und bei der Verschiebung der Aufbringeinrichtung von unten nach oben konstant bleibt.

7. Vorrichtung nach einem der Ansprüche 1 bis 6, in Kombination mit Anspruch 2, dadurch gekennzeichnet, dass die Rolle (32) an zwei Endabstützungen (26) frei drehbar angebracht ist, die unter der Wirkung der Antriebsmittel (28) in Synchronismus verschiebbar sind, und dadurch, dass die Haltemittel (34) von den genannten Abstützungen getragen sind.

8. Vorrichtung nach Anspruch 7, dadurch gekennzeichnet, dass die Abstützungen (26) einen waagerechten länglichen Schlitz (38) zur Aufnahme eines Endes der Achse der Rolle aufweisen, und dass die Haltmittel (34) eine Verbindung (42) aufweisen, die mit einem Ring (44), der an der Achse der Rolle angebracht ist, und mit einer Stange (46) einer Druckvorrichtung (48) verbunden ist, die an der Abstützung vertikal angebracht ist.

9. Vorrichtung nach einem der Ansprüche 7 und 8, dadurch gekennzeichnet, dass die Abstützungen (26) mit Führungsrollen (56) versehen sind, die mit vertikalen Führungen (58) zusammenarbeiten.

10. Vorrichtung nach Anspruch 1, dadurch gekennzeichnet, dass die Haltemittel (34) dargestellt sind durch eine geringe relative Neigung zwischen der Austauschfläche (10) und der Ebene, in welcher sich die Erzeugende der Aufbringeinrichtung (32) nahe dieser Austauschfläche verschiebt derart, dass der Abstand zwischen der Aufbringeinrichtung (32) und der Austauschfläche bei Verschiebung der Aufbringeinrichtung von oben nach unten sich progressiv verringert.

11. Vorrichtung nach einem der Ansprüche 1 bis 10, dadurch gekennzeichnet, dass die Aufbringeinrichtung eine obere Rolle (32), die über im wesentlichen den halben oberen Teil der Austauschfläche (107 verschiebbar ist, und eine untere Rolle (32') aufweist, die über wesentlich den halben unteren Teil der Austauschfläche verschiebbar ist.

12. Vorrichtung nach einem der Ansprüche 1 bis 11, dadurch gekennzeichnet, dass die Austauschfläche (10) eine Platte aus rostfreiem Stahl ist, und dass die Aufbringeinrichtung aus Polytetrafluoräthylen besteht.


**Claims**

1. Apparatus for the separation of a solvent from a solution by putting said solution into the shape of a thin layer of a type which includes at least one flat vertical heat exchange surface (10), supply means (24) to bring the solution to the upper part of the heat exchange surface and means for recovering the product (36) in the lower part of the heat exchange surface, characterised in that it also has means with thermal action (20) to bring the exchange surface to a temperature between 0° and 200°C; at least one horizontal applicator (32) which is vertically displaceable along the exchange surface in order to spead the solution there in a thin layer: entrainment means (28) to displace the applicator in vertical translation alternately downwards and upwards: locking means (34) to regulate the spacing between the applicator and the exchange surface.

2. Apparatus as claimed in claim 1, characterised in that the applicator is a roller (32) with a horizontal axis.

3. Apparatus as claimed in one of claims 1 and 2, characterised in that it has two parallel exchange surfaces (10) which are spaced and between them define a chamber for the thermal action means (20).

4. Apparatus as claimed in one of claims 1 to 3, characterised in that the thermal action means (20) are heating means to cause the separation of the solvent by evaporation.

5. Apparatus as claimed in one of claims 1 to 3, characterised in that the thermal action means (20) are refrigerating means to cause the separation of the solvent by crystallisation.

6. Apparatus as claimed in one of claims 1 to 5, characterised in that the locking means (34) are under the control of the entrainment means (28) in such a way that the distance between the applicator (32) and the exchange surface (10) decreases progressively when the applicator is displaced downwards, then increases again and remains constant when the applicator is displaced upwards.

7. Apparatus as claimed in one of claims 1 to 6, taken in combination with claim 2, characterised in that the roller (32) is mounted so as to rotate freely on two end supports (26) which are dispaceable in synchronism by the action of the entrainment means (28) and the locking means (34) are carried on the said supports.

8. Apparatus as claimed in claim 7, characterised in that the supports (26) have a horizontal oblong slot (38) to receive one end of the axle of the roller and the locking means (34) include a connection (42) linked to a ring (44) mounted on the axle of the roller and to the shaft (46) of a jack (48) mounted vertically on the support.

9. Apparatus as claimed in one of claims 7 and 8, characterised in that the supports (26) are provided with guide rollers (56) which co-operate with vertical guides (58).

10. Apparatus as claimed in claim 1, characterised in that the locking means (34) are formed by a slight relative inclination between the exchange surface (10) and the plane in which the generator of the applicator (32) is displaced adjacent to the said exchange surface in such a way that the distance between the applicator (32) and the exchange surface decreases progressively when the applicator is displaced downwards.

11. Apparatus as claimed in one of claims 1 to 10, characterised in that the applicator comprises an upper roller (32) which is dispaceable over substantially the upper half of the exchange surface (10) and a lower roller (32') which is displaceable over substantially the lower half of the exchange surface.

12. Apparatus as claimed in one of claims 1 to 11, characterised in that the exchange surface (10) is a plate of stainless steel and the applicator is made from polytetrafluoroethylene.

FIG_1

FIG_2

FIG_3

9